# EUROPÄISCHE PATENTSCHRIFT

(11) **EP 1 319 610 B1**
(45) Veröffentlichungstag und Bekanntmachung des Hinweises auf die Patenterteilung: **02.03.2005**
(21) Anmeldenummer: 02027833.9
(22) Anmeldetag: 12.12.2002
(51) Int. Cl.: B65D 90/10, F16J 13/06, F16J 13/08

(54) **Deckelvorrichtung, insbesondere für einen Druckbehälter**
Closure device particularly for pressure vessel
Dispositif de fermeture notamment pour un recipient pressurisé

(30) Priorität: 12.12.2001 DE 20120161 U
(43) Veröffentlichungstag der Anmeldung: 18.06.2003
(73) Patentinhaber: Feldbinder & Beckmann Fahrzeugbau GmbH & Co. KG, 21423 Winsen/Luhe (DE)
(72) Erfinder: Beckmann, Jan-Dirk, 21423 Winsen/Luhe (DE); Feldbinder, Otto, 29643 Neuenkirchen (DE)
(74) Vertreter: Gerbaulet, Hannes, Dipl.-Ing.

(56) Entgegenhaltungen:
- AU-A- 5 515 880
- DE-B- 1 033 976
- GB-A- 246 981
- US-A- 3 786 955
- US-A- 4 441 431
- US-A- 6 095 365

## Beschreibung

Die Erfindung betrifft eine Deckelvorrichtung gemäß dem Oberbegriff des Anspruchs 1, wie sie aus der US-PS 4,441,431 bekannt ist und insbesondere eine Deckelvorrichtung für Druckbehälter, beispielsweise für druckbehaftete und nicht druckbehaftete Tankfahrzeuge und pneumatische Druckgefäße und Mannlöcher dieser Art.

Insbesondere unter Sicherheitsgesichtspunkten wurden Deckelvorrichtungen für druckbehaftete und nicht druckbehaftete Tankfahrzeuge und für pneumatische Druckgefäße und Mannlöcher entwickelt, die eine Reihe von besonders wichtigen Merkmalen aufweisen.

Zum Ersten gehört dazu, dass die vorhandenen Öffnungen in Druckbehältern möglichst einfach gegen den im Innern eines Druckbehälters herrschenden Druck gesichert werden können. Zum Zweiten hat es sich in zunehmendem Maße als wünschenswert erwiesen, dass unter Beachtung und Einhaltung der Konstruktionsnormen für Vorrichtungen zum Öffnen beziehungsweise Verschließen einer Öffnung an einem Druckbehälter Deckel konzipiert werden, die besonders große Öffnungen, beispielsweise Mannlöcher, abdecken können.

Dabei sind drittens unter den Sicherheitsaspekten Deckelvorrichtungen entwickelt worden, die trotz größerer zu verschließender Öffnungen an Druckbehältern eine leicht bedienbare und kostengünstige Lösung zur Druckabsicherung der Druckbehälter darstellen.

Bekannt ist eine Deckelvorrichtung zum Öffnen oder Verschließen eines Druckbehälters. Es ist dort vorgesehen, einen Deckel zur Aufnahme von Verschlußelementen mit zur Aufnahme der Verschlußelemente benötigten Aufnahmen zu versehen und den Deckel mittels hebelartiger Deckelvorrichtungen zu verschließen.

Die hebelartigen Elemente der Deckelvorrichtung sind auf einer vertikalen Achse - bezogen auf den Deckel - drehbar ausgeführt und ermöglichen durch Drehung der hebelartigen Elemente eine Justierung, so dass nach Betätigung der Hebel ein Kraft- und Formschluß zwischen dem Druckbehälter und dem Deckel mit einem durch die vertikale Drehung voreingestellten Anpressdruck entsteht.

Abgesehen von der relativ komplizierten Herstellung und der großen Anzahl von hebelartigen Elementen zum Verschließen des Deckels ist jedoch bei der bekannten Lösung nachteilig, dass nach Öffnen der hebelartigen Elemente der Deckelvorrichtung keine ausreichende Sicherung vor den Wirkungen des im Druckbehälter befindlichen Restdruckes vorhanden ist.

Zudem ist nachteilig, dass eine Nachstellbarkeit der hebelartigen Elemente zur Erzeugung des Anpressdruckes des Deckels gegenüber dem Druckbehälter im verschlossenen Zustand nicht mehr gegeben ist. Der gewünschte Anpressdruck muss vielmehr bereits beim geöffneten Deckel durch Drehen der hebelartigen Elemente der Deckelvorrichtung in Richtung Druckbehälter eingestellt werden und wirkt nach Verschließen mit genau dem Anpressdruck, der sich, mit der vor dem Schließen vorgenommenen Anzahl der Drehungen der hebelartigen Elemente, auf den Deckel einstellt.

Der Erfindung liegt daher Aufgabe zugrunde, eine gattungsgemäße Vorrichtung zu schaffen, die unter Vermeidung der genannten Nachteile der bekannten Lösung ein Öffnen beziehungsweise Verschließen eines Behälters, insbesondere eines Druckbehälters, ermöglicht.

Diese Aufgabe wird durch eine Deckelvorrichtung mit den in Anspruch 1 angegebenen Merkmalen gelöst Die Hebelelemente der Deckelvorrichtung bestehen im Wesentlichen aus einem Gewindebolzen mit Gewindebolzenöse. Der Gewindebolzen ist über Gewindebolzenhalterungsösen in einer Gewindebolzenhalterung, die am Behälter befestigt sind, über einen steckbaren Sicherungsbolzen gelagert. Somit ist der Gewindebolzen über eine zum Deckel horizontale Gewindebolzenschwenkachse drehbar in der Gewindebolzenhalterung gelagert. Der Gewindebolzen weist eine Führungshülse auf, die mit der Oberseite des Deckels des Druckbehälters bei geschlossenem Zustand des Deckels über einen Anschlag des Hebels eine kraftschlüssige Wirkverbindung bildet.

Hierin liegt ein wesentlicher Vorteil der Erfindung, da mittels einer Mutter und einer Kontermutter auf dem Gewindebolzen oberhalb der Führungshülse eine kraftschlüssige Wirkverbindung zwischen dem mit der Führungshülse verbundenen Hebelanschlag auf einer Oberseite des Deckels und den am Behälter befestigten Hebelelementen hergestellt werden kann. Der Kraftschluss ist durch ein stufenloses Drehen der Mutter unter Nachsicherung der Kontermutter möglich, womit ein ausreichender Anpressdruck einstellbar ist.

Die Einstellung des Anpressdruckes ist zudem ohne Öffnen des Deckels nach der bereits erfolgten Betätigung der Deckelvorrichtung jederzeit durch Nachstellen der Mutter und der Kontermutter möglich. Besonders vorteilhaft ist es weiterhin, dass bereits verriegelte Druckbehälter nachstellbar sind, so dass stets ein sicherer Anpressdruck gewährleistet ist.

Weitere Vorteile der Erfindung ergeben sich dadurch, dass durch die erfindungsgemäße Deckelvorrichtung eine vorteilhafte Lösung der stufenlosen sicheren Einstellung des Anpressdruckes bereits ausreichend ermöglicht ist, so dass lediglich eine geringe Anzahl von Deckelvorrichtungen, insbesondere vier Dekkelvorrichtungen, verwendet wird. Dadurch ergibt sich eine kompakte Bauweise und es lässt sich zudem durch möglichst flache Bauweise der Deckelvorrichtung Gewicht einsparen.

Ein weiterer Vorteil der Erfindung liegt darin, dass der Deckel eines Druckbehälters mit einer Ausnehmung versehen ist, die eine Kontur aufweist, die nach einer vertikalen Drehung eines Hebels auf einer zum Dekkel vertikalen Drehachse in mindestens einer Position mit einer Kontur des Hebelanschlages und/oder des Hebelelements korrespondiert und nur in dieser Position der Deckel vollständig öffenbar oder verschließbar ist.

Wie sich gezeigt hat, ist durch die Erfindung vorteilhafterweise sichergestellt, dass kein vollständiges Öffnen des unter Druck stehenden Deckels zunächst nach einer Verschwenkung des Hebels in einer vertikalen Ebene möglich ist. Diese Lösung wirkt als Unfallsicherung und ist ein wesentlicher Vorteil der Erfindung.

Durch die erste Betätigung des Hebels der Deckelvorrichtung ist ein Lösen des Deckels vom Druckbehälter in einfacher Weise möglich, ohne dass sofort ein vollständiges Öffnen möglich ist. Dadurch kann vorteilhafterweise Restdruck aus dem Druckbehälter entweichen, ohne dass das Bedienpersonal einer Gefahr durch druckbehaftetes Aufschlagen des Deckels unterliegt.

In einer bevorzugten Ausgestaltung der Erfindung ist eine vertikale Drehung des Hebels um genau 90° auf einer zum Deckel vertikalen Drehachse auszuführen, um den Deckel vollständig öffnen zu können.

Die Herstellung dieser Deckelvorrichtung ist durch die kompakte Bauweise wesentlich preiswerter und da weniger Teile verwendet werden, werden grundsätzlich weniger Ersatzteile benötigt, was letztendlich besonders kundenfreundlich ist.

Durch eine günstige Werkstoffauswahl wird ferner ein geringer Reibbeiwert zwischen den Dichtflächen des Deckels und des Druckbehälters erreicht, wodurch ein leichtes Öffnen des Deckels mittels der Deckelvorrichtung ermöglicht ist, womit eine zusätzliche Entlastung des Bedienpersonals einhergeht.

In einer bevorzugten Ausgestaltung der Erfindung ist der Hebel mit einem Hebelanschlag versehen, der einen exzentrischen Drehpunkt aufweist. Beim Betätigen des Hebels, insbesondere beim Öffnen über seine horizontale Hebelschwenkachse, wird der beim Schließen des Deckels erreichte Totpunkt des Hebels beim Öffnen überwunden. Die vorhandene Exzentrizität bewirkt, dass der Abstand zwischen dem Drehpunkt des Hebelanschlages und einer Oberseite des Deckels beim Öffnen immer geringer wird, wodurch der Totpunkt leicht überwindbar ist und somit ein leichtes Öffnen des Hebels gewährleistet ist.

Weitere bevorzugte Ausgestaltungen der Erfindung ergeben sich aus den in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Deckelvorrichtung in geschlossenem Zustand;
- Figur 2: die Deckelvorrichtung in um eine horizontale Hebelschwenkachse betätigtem Zustand;
- Figur 3: die Deckelvorrichtung in um die horizontale Hebelschwenkachse und um eine um 90° verlagerte vertikale Drehachse betätigtem Zustand und
- Figur 4: einen Deckelflansch mit einer Übergreiflasche mit der vollständig geöffneten Deckelvorrichtung.

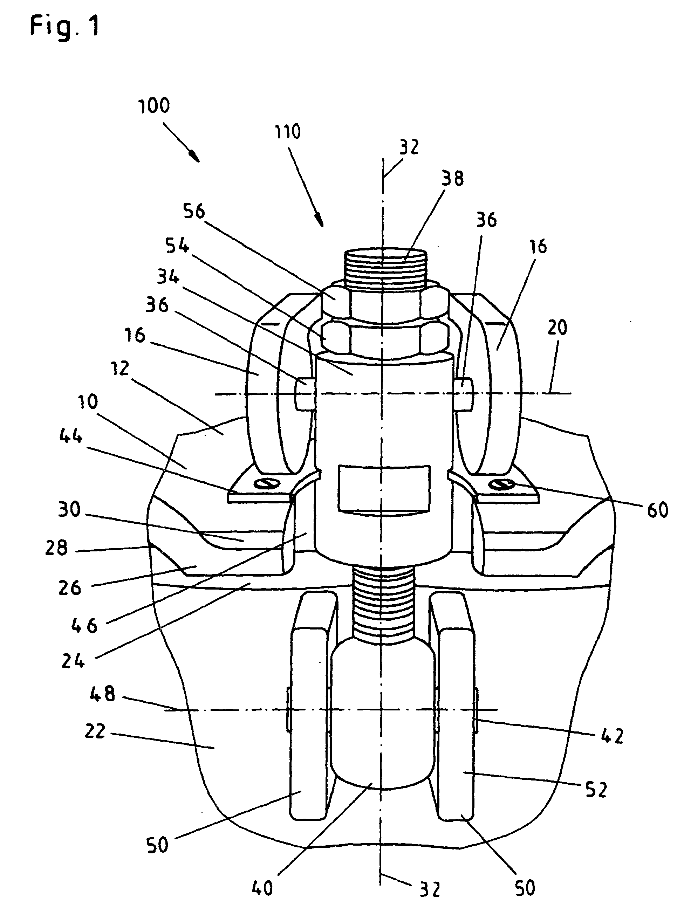

Figur 1 zeigt eine öffenbare Deckelvorrichtung 100 für einen Behälter 22, insbesondere einen Druckbehälter, im Wesentlichen bestehend aus einem Hebelelement 110 und einem Hebel 14 (in Figur 1 nicht dargestellt). Der Behälter 22 besitzt einen Dom 24 und einen auf dem Dom 24 befestigten Domflansch 26. Der Domflansch 26 bildet eine Behälteröffnung 62 (in Figur 1 nicht ersichtlich). Die Behälteröffnung 62 ist durch einen Deckel 10 verschließbar. Zwischen Deckel 10 und Domflansch 26 ist eine Deckeldichtfläche 30 ausgebildet, die eine Dichtung 28 aufweist.

Auf einer Deckeloberseite 12 des Deckels 10 befindet sich parallel zur horizontalen Ebene des Deckels 10 der in Figur 1 nicht sichtbare Hebel 14, wobei der Hebel 14 aus einem Hebelarm 18, ebenfalls in Figur 1 nicht sichtbar, und einem Hebelanschlag 16 besteht. Der Hebelanschlag 16, als mit dem Deckel 10 einen Anschlag bildender Teil des Hebels 14, ist in Figur 1 sichtbar. Der Hebelanschlag 16 weist zwischen den beinartigen, den Anschlag bildenden Elementen 16a, 16b eine Führungshülse 34 auf. Die Führungshülse 34 weist drehbewegliche Führungshülsenstifte 36 auf, die im Hebelanschlag 16 exzentrisch oder konzentrisch befestigt sind.

Alternativ sind die Führungshülsenstifte 36 in der Führungshülse 34 befestigt, wobei dann eine drehbewegliche exzentrische oder konzentrische Führung im Hebelanschlag 16 ausgeführt ist. Die horizontal angeordneten Führungshülsenstifte 36 bilden eine horizontale Hebelschwenkachse 20.

Das Hebelelement 110 der Deckelvorrichtung 100 weist eine rechtwinklig zur horizontalen Hebelschwenkachse 20 vertikale Achse 32 auf, auf der das Hebelelement 110 verläuft.

Das Hebelelement 110 besteht aus einem Gewindebolzen 38 mit einer Gewindebolzenöse 40. Am Behälter 22, insbesondere am Dom 24, sind Gewindebolzenhalterungen 50 angeordnet. Die Gewindebolzenhalterungen 50 weisen jeweils zentrische Gewindebolzenhalterungsösen 52 auf. Der Gewindebolzen 38 ist mittels eines Sicherungsbolzens 42 in den Gewindebolzenhalterungsösen 52 der Gewindebolzenhalterung 50 befestigt. Die Anordnung des Sicherungsbolzens 42 in der Gewindebolzenöse 40 und den Gewindebolzenhalterungsösen 52 der Gewindebolzenhalterung 50 verläuft auf einer Gewindebolzenschwenkachse 48.

Der Gewindebolzen 38 weist als Führung die Führungshülse 34 auf. Die Führungshülse 34 weist kein Innengewinde auf und ist somit, insofern der Hebel 14 durch den Hebelanschlag 16 keinen Anschlag mit dem Deckel 10 bildet, frei auf der vertikalen Achse 32 des Gewindebolzens 38 beweglich. Eine Begrenzung für die Bewegung der Führungshülse 34 auf der vertikalen Achse 32 stellt einerseits eine Mutter 54 mit einer sichernden Kontermutter 56 und andererseits die Gewindebolzenöse 40 dar.

In Figur 1 ist die Deckelvorrichtung 100 in der den Behälter 22 verschließenden Position dargestellt. Dabei ist der Hebel 14 (nicht dargestellt) in der Art und Weise betätigt, dass der Hebelarm 18 (nicht dargestellt) horizontal zum Deckel 10 angeordnet ist und der Hebel 14 mit seinem Hebelanschlag 16 an der Dekkeloberseite 12 des Deckels 10 einen Anschlag bildet. Das Hebelelement 110 ist in der Art um die horizontale Hebelschwenkachse 20 und die Gewindebolzenschwenkachse 48 geklappt, so dass das Hebelelement 110 auf der vertikalen Achse 32 in einer vorhandenen Ausnehmung 46 des Deckels 10 angeordnet ist.

Figur 1 zeigt ferner, dass die Ausnehmung 46 zusätzlich eine Übergreiflasche 44 aufweist, die mittels einer Schraubverbindung 60 auf der Deckeloberseite 12 des Deckels 10 befestigt ist. Die Bedeutung der Übergreiflasche 44 wird in den weiteren Figuren des Ausführungsbeispiels näher erläutert.

Figur 1 verdeutlicht neben der anschaulichen formschlüssigen Verbindung zwischen Deckel 10 und Domflansch 26 ebenfalls die kraftschlüssige Verbindung. Durch Klappen des Hebelelementes 110 in die Ausnehmung 46 bildet der Hebelanschlag 16, wie oben beschrieben, auf der Deckeloberseite 12 des Deckels 10 einen Anschlag. Gleichzeitig bildet die Führungshülse 34 über die Führungshülsenstifte 36 an der Mutter 54 beziehungsweise der Kontermutter 56 einen weiteren Anschlag aus. Durch Betätigung der Mutter 54, also Drehen der Mutter 54 im Uhrzeigersinn auf dem Rechtsgewinde des Gewindebolzens 38, wird der Gewindebolzen 38 entlang des Gewindes vertikal in Richtung des Deckels 10 bewegt, wodurch Kraftschluss zwischen Deckel 10 und Domflansch 26 entsteht und die Behälteröffnung 62 (nicht sichtbar) unterstützt von der Dichtung 28 abgedichtet wird.

Auf die exzentrische Anordnung der Führungshülsenstifte 36 auf der Hebelschwenkachse 20 wird bei der Erläuterung der weiteren Figuren eingegangen.

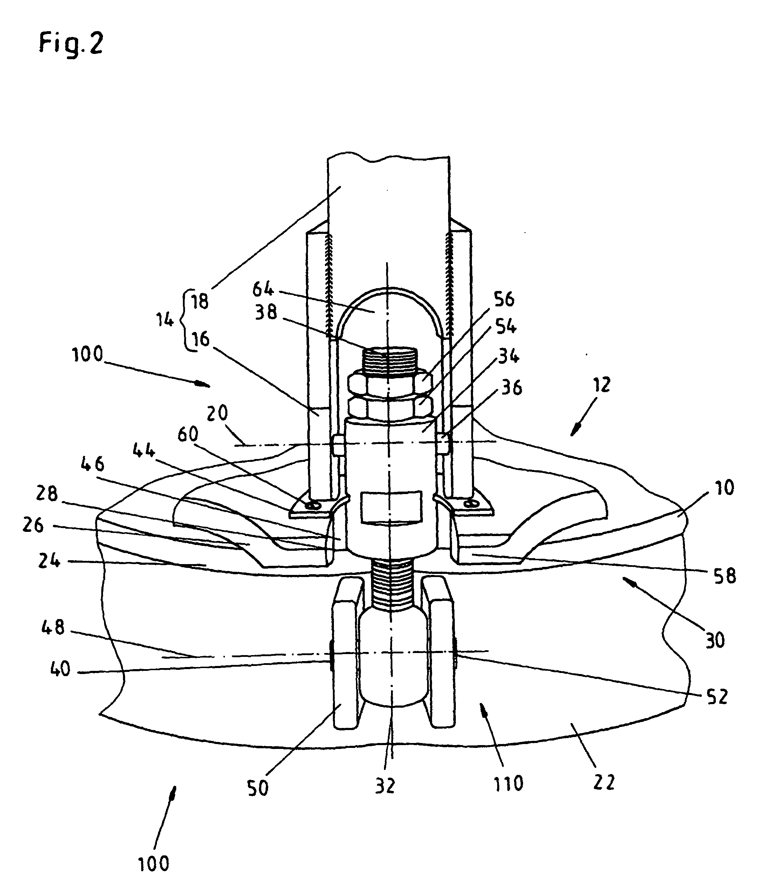

Figur 2 zeigt die öffenbare Deckelvorrichtung 100 des Behälters 22 in einer um die horizontale Hebelschwenkachse 20 betätigten Position. Das Hebelelement 110 befindet sich - verglichen mit Figur 1 - zunächst in unveränderter Position.

Figur 2 zeigt wiederum den Dom 24 und den auf dem Dom 24 befestigten Domflansch 26. Zwischen Deckel 10 sowie Domflansch 26 ist eine Deckeldichtfläche 30 ausgebildet, die die Dichtung 28 aufweist. Der in Figur 1 nicht sichtbare Hebel 14 ist in Figur 2 nach Schwenken um im Wesentlichen 90° sichtbar.

Figur 2 zeigt zudem den Hebel 14 mit seinem Hebelanschlag 16 und seinem Hebelarm 18. Die beinartige Ausführung des Hebelanschlages 16 führt zur Ausbildung einer Öffnung 64. In dieser ausgebildeten Öffnung 64 befindet sich beim Betätigen des Hebels 14 der obere Teil des Hebelelementes 110. Der obere Teil des Hebelelementes 110 besteht im Wesentlichen aus dem Gewindebolzen 38, der auf ihm geführten Führungshülse 34 und der einen Anschlag bildenden Mutter 54 sowie der sichernden Kontermutter 56.

Der Hebel 14 verläuft in der in Figur 2 gezeigten Position auf der vertikalen Achse 32 des Hebelelementes 110.

Figur 2 zeigt ferner die Führungshülsenstifte 36 in der Führungshülse 34. Durch die konzentrische Anordnung der Führungshülsenstifte 36 und damit Bildung einer exzentrischen, horizontalen Hebelschwenkachse 20 bezüglich des Hebelanschlages 16 verringert sich beim Betätigen des Hebels 14 der Abstand zwischen den Führungshülsenstiften 36 und der den Anschlag bildenden Dekkeloberseite 12. Dadurch kommt es zu einer ersten geringen Verlagerung der Führungshülse 34 auf der vertikalen Achse 32 in Richtung des Deckels 10, wodurch eine Verringerung des Anpressdruckes des Deckels 10 auf den Domflansch 26 und somit auf die Dichtung 28 einhergeht.

Bei einer alternativen Ausführung, bei der die Führungshülsenstifte 36 Exzentrisch angeordnet sind, wird eine horizontale Hebelschwenkachse 20 bezüglich des Hebelanschlages 16 gebildet, die jedoch den Abstand bei Betätigung des Hebels 14 zwischen den Führungshülsenstiften 36 und der den Anschlag bildenden Deckeloberseite 12 nicht verringert. Dadurch kommt es zu keiner ersten geringen Verlagerung der Führungshülse 34 auf der vertikalen Achse 32 in Richtung des Deckels 10, wodurch keine Verringerung beziehungsweise Erhöhung des Anpressdruckes des Deckels 10 auf den Domflansch 26 und somit auf die Dichtung 28 einhergeht.

Sowohl die konzentrische als auch die exzentrische Ausführung der Führungshülsenstifte 36 im Hebelanschlag 16 ist ausführbar.

Figur 2 zeigt ergänzend die in dieser Betätigungsphase unveränderten Elemente des Hebelelementes 110, die Ausnehmung 46, die Übergreiflasche 44 mit den Schraubverbindungen 60, die auf der Deckeloberseite 12 befestigt sind, sowie die Gewindebolzenhalterungen 50 und die Gewindebolzenhalterungsösen 52, die über den Sicherungsbolzen 42 in die Gewindebolzenöse 40 eingreifen und die horizontale Gewindebolzenschwenkachse 48 bilden.

Figur 2 zeigt, dass der Hebelanschlag 16 auf der Deckeloberseite 12 der Ausnehmung 46 weiterhin den Anschlag bildet.

Figur 2 verdeutlicht, dass die formschlüssige Verbindung zwischen Deckel 10 und Domflansch 26 durch das Hebelelement 110, insbesondere durch den Hebelanschlag 16, trotz Betätigung des Hebels 14 nicht aufgehoben ist. Die kraftschlüssige Verbindung wurde durch die Betätigung des Hebels 14 um 90° bei konzentrischer Ausführung der Hebelschwenkachse 20 bezüglich der Dekkeloberseite 12 ohne Betätigung der Muttern 54, 56 geringfügig aufgehoben.

Der Anschlag wird durch eine vorbestimmte Kontur bildende Form der Ausnehmung 46 des Deckels 10 gebildet.

Zur Bildung der Kontur in der Ausnehmung 46 des Deckels 10 bestehen alternative Möglichkeiten.

Erstens kann diese Kontur vollständig in den Deckel 10 eingearbeitet sein, so dass der Hebelanschlag 16 in der in Figur 2 befindlichen Position an der Dekkeloberseite 12 des Deckels 10 selbst den gewünschten Anschlag bildet.

Zweitens ist auch eine Ausbildung möglich, in der die Ausnehmung 46 so groß ist, dass der Hebelanschlag 16 des Hebels 14 in der in Figur 2 befindlichen Position ohne zusätzlich angebrachte Übergreiflaschen 44 mit Kontur bildenden Einkragungen 58 keinen Anschlag mehr bildet.

Für diese Ausbildungsform sind die Übergreiflaschen 44 derart angeordnet, dass der Anschlag des Hebelanschlages 16 nur von den Übergreiflaschen 44 gebildet wird.

In dieser Ausbildungsform bildet das Hebelelement 110 auf der vertikalen Achse 32 in der vorhandenen Ausnehmung 46 nur durch die Übergreiflaschen 44 auf der Oberseite 12 des Deckels 10 einen Anschlag.

Wie Figur 2 zeigt, kann, durch Betätigung des Hebels 14 um die horizontale Hebelschwenkachse 20 um im Wesentlichen 90°, der Deckel 10 nicht geöffnet werden. Unter Sicherheitsaspekten ist vorteilhafterweise ein erstes Lösen des Deckels 10 und Entspannen des Behälters 22 möglich. Dazu dient entweder die exzentrische Ausführung, wie oben beschrieben, oder ein Lösen der Muttern 56 und 54. Es besteht keine Gefahr für das Bedienpersonal bei Betätigung des Hebels 14 bei einem unter Druck stehenden Behälter 22.

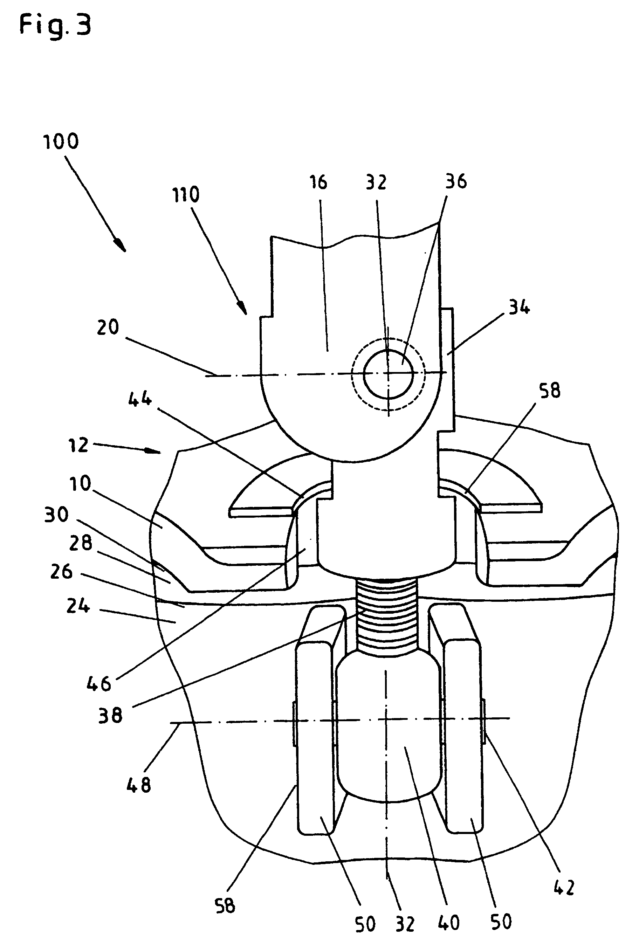

Figur 3 zeigt die notwendige Position des Hebels 14 beziehungsweise des Hebelanschlages 16, in der eine Öffnung des Deckels 10 möglich ist. Dargestellt ist wiederum der Deckel 10, der Dom 24, der Domflansch 26 und die Deckeldichtfläche 30 mit der Dichtung 28. Das Hebelelement 110 der Deckelvorrichtung 100 ist in Figur 3 auf den Bereich der Ausnehmung 46 fokussiert.

Aus Figur 3 ist erkennbar, dass der Hebelanschlag 16 bezüglich der vertikalen Achse 32 verlagert ist, insbesondere im Wesentlichen um 90° gedreht ist. Dadurch ist die Kontur des Hebelanschlages 16 und die exzentrisch angeordneten Führungshülsenstifte 36 sichtbar. Die dahinter liegende Führungshülse 34 ist dagegen in dieser Position nur teilweise sichtbar.

Ferner ist deutlich erkennbar, dass der Abstand der horizontalen Hebelschwenkachse 20 zur Deckeloberseite 12 größer ist als in Figur 2. Dieser Abstand vergrößert sich unter der Voraussetzung, dass die hier in Figur 3 nicht dargestellte Kontermutter 56 und die Mutter 54 gelöst sind und damit der mit der Führungshülse 34 verbundene Hebel 14 auf dem Gewindebolzen 38 entgegen der Deckeloberseite 12 vertikal verlagert ist. In dieser Position bildet der Hebelanschlag 16 bei im Wesentlichen rechtwinkliger Stellung der Hebelschwenkachse 20 zu der Gewindebolzenschwenkachse 48 keinen Anschlag mit der Ausnehmung 46 beziehungsweise der den Anschlag bildenden Übergreiflasche 44 aus.

Sowohl der Kraftschluss als auch der den Deckel 10 sichernde Formschluss, wie in den Figuren 1 und 2 beschrieben, ist aufgehoben.

Die in Figur 3 gezeigte Ausbildungsform mit angebrachten Übergreiflaschen 44 verdeutlicht, dass ein Öffnen des Deckels 10 in dieser Position bereits möglich ist, ohne das Hebelelement um seine Gewindebolzenschwenkachse 48 zu schwenken. Jedoch kann der Deckel 10 nur dann öffenbar, wenn die durch den Gewindebolzen 38 geführte Führungshülse 34 und die beinartigen Hebelanschläge 16 eine Kontur ausbilden, die mit der Kontur der Übergreiflaschen 44 unter Berücksichtigung der Kontur bildenden Einkragungen 58 korrespondiert.

Dabei sind verschiedene Konturen denkbar.

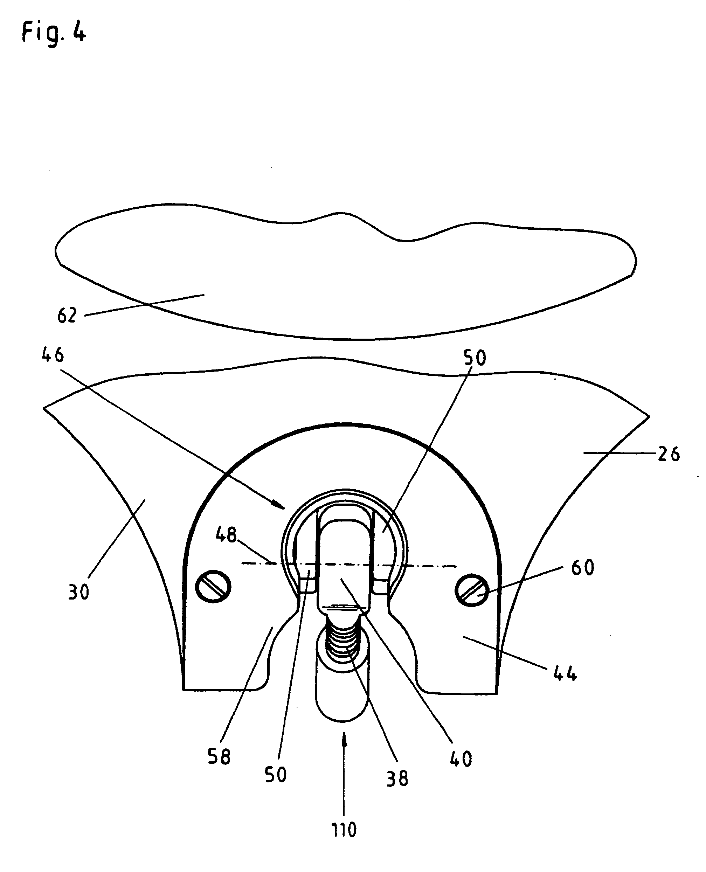

Durch die Einkragungen 58 bildet sich in Figur 3 sichtbar und nachfolgend in Figur 4 als Draufsicht dargestellt eine achtförmige Kontur der Ausnehmung 46 durch die Übergreiflaschen 44 aus.

Es ist jedoch auch eine achtförmige Ausnehmung 46 im Deckel 10 selbst ohne zusätzlich auf die Deckeloberseite 12 des Deckels 10 angebrachte übergreiflasche 44 denkbar.

Weitere Konturen könnten in Abhängigkeit von der Ausbildung des Hebelanschlages 16 entweder für die Ausnehmung 46 im Deckel 10 selber oder für die Übergreiflasche 44 beispielsweise rechteckig ausgeführt sein.

Somit ist das Öffnen des Deckels 10 nur in einer konturvorbestimmten Position möglich, ohne das Hebelelement 110 um die Gewindebolzenschwenkachse 48 zu schwenken.

Die Gewindebolzenschwenkachse 48 ist in Figur 3 ergänzend dargestellt und weist die Gewindebolzenhalterungen 50 mit den Gewindebolzenhalterungsösen 52 auf, die über den Sicherungsbolzen 42 den Gewindebolzen 38 in der Gewindebotzenöse 40 führen.

In Figur 4 zeigt die Deckelvorrichtung 100 in Fortsetzung der Betätigung der Figuren 2 und 3 in einer Position, bei der das Hebelelement 110 vollständig um die Gewindebolzenschwenkachse 48 geklappt ist. Dadurch ist in Figur 4 erstmals die Behälteröffnung 62 sichtbar. In der Draufsicht der Figur 4 ist der Domflansch 26 mit der Deckeldichtfläche 30 und die im Bereich der Ausnehmung 46 mittels der Schraubverbindung 60 auf dem Domflansch 26 angebrachte Übergreiflasche 44 sichtbar. Figur 4 zeigt den nach unten geklappten Gewindebolzen 38 mit der Gewindebolzenöse 40 und die Draufsicht der Gewindebolzenhalterung 50. Die Einkragungen 58 sind - wie bereits in Figur 3 beschrieben - erkennbar und bilden die achtförmige Kontur oberhalb der Ausnehmung 46 durch die angebrachten Übergreiflaschen 44 aus. Wie bereits in Figur 3 beschrieben und in Figur 4 erkennbar, ist durch den Austausch der Übergreiflasche 44 beliebig die Kontur, die das vollständige Öffnen des Deckels 10 bereits ohne Klappen der Deckelvorrichtung 100 um die horizontale Gewindebolzenschwenkachse 48 ermöglicht, konstruktiv vorbestimmbar.

Zusammenfassend vollzieht sich der an das Öffnen nachfolgende Schließvorgang der Deckelvorrichtung 100 wie folgt:

Die Hebelvorrichtung 110 wird um die horizontale Gewindebolzenschwenkachse 48 geklappt und die Führungshülse 34 und der Hebelanschlag 16 werden auf der Deckeloberseite 12 des Deckels 10 positioniert.

Anschließend erfolgt eine Drehung des Hebels 14 und damit der Führungshülse 34 um die vertikale Achse 32 des Gewindebolzens 38, wodurch durch den Hebelanschlag und in der beschriebenen Ausbildungsform durch die Übergreiflaschen 44 ein Anschlag auf der Deckeloberseite 12 entsteht.

Nachfolgend wird der Hebel 14 um die Hebelschwenkachse 20 geklappt, so dass der Hebel 14 parallel zum Deckel 10 verlagert ist. Durch diese Schwenkbewegung um die Hebelschwenkachse 20 erfolgt - wie vorher beschrieben - durch die Exzentrizität (nur bei exzentrischer Ausführungsform) der angeordneten Führungshülsenstifte 36 in dem Hebelanschlag 16 ein erster Anpressvorgang des Deckels 10 in Schließrichtung.

Zur Erreichbarkeit einer vollständigen Abdichtung des Deckels 10 gegenüber dem Behälter 22 ist eine Betätigung der Muttern 54 beziehungsweise der Kontermutter 56 nötig. Eine Nachverstellung der Mutter 54 und Kontermutter 56 ist in geschlossenem Zustand jederzeit möglich.

### BEZUGSZEICHENLISTE

- 100: Deckelvorrichtung
- 110: Hebelelement
- 10: Deckel
- 12: Deckeloberseite
- 14: Hebel
- 16: Hebelanschlag
- 18: Hebelarm
- 20: Hebelschwenkachse
- 22: Behälter
- 24: Dom
- 26: Domflansch
- 28: Dichtung
- 30: Deckeldichtfläche
- 32: vertikale Drehachse
- 34: Führungshülse
- 36: Führungshülsenstifte
- 38: Gewindebolzen
- 40: Gewindebolzenöse
- 42: Sicherungsbolzen
- 44: Übergreiflaschen
- 46: Ausnehmung
- 48: Gewindebolzenschwenkachse
- 50: Gewindebolzenhalterungen
- 52: Gewindebolzenhalterungsösen
- 54: Mutter
- 56: Kontermutter
- 58: Einkragungen
- 60: Schraubverbindung
- 62: Behälteröffnung
- 64: Öffnung

## Patentansprüche

1. Deckelvorrichtung (100) für eine Behälteröffnung (62) eines Behälters (22), insbesondere eines Druckbehälters, mit mindestens einem an dem Behälter (22) befestigbaren, auf eine Deckeloberseite (12) eines Deckels (10) klappbaren Hebelelement (110), wobei das Hebelelement (110) in eine Ausnehmung (46) des Deckels (10) eingreift und der Behälter (22) durch Betätigung des Hebelelementes (110) und eines mit dem Hebelelement (110) verbundenen Hebels (14) verschließbar ist, wobei die Ausnehmung (46) eine Kontur aufweist, die nach einer vertikalen Drehung des Hebels (14) auf einer zum Deckel (10) vertikalen Drehachse (32) in mindestens einer Position mit einer Kontur eines Hebelanschlages (16) des Hebels (14) und/oder des Hebelelementes (110) korrespondiert und die Behälteröffnung (62) durch den Deckel (10) öffenbar oder verschließbar ist, **dadurch gekennzeichnet, dass** das Hebelelement (110) aus dem Hebel (14) und einem an dem Hebel (14) über eine Führungshülse (34) wirkverbindbaren Gewindebolzen (38) ausgebildet ist, und die Führungshülse (34) vertikal auf dem Gewindebolzen (38) verlagerbar, frei beweglich und auf der vertikalen Achse (32) drehbar ist und mittels einer Mutter (54) und einer Kontermutter (56) sicherbar ist.

2. Deckelvorrichtung nach Anspruch 1, **dadurch gekennzeichnet, dass** ein Dom (24) des Behälters (22) einen Domflansch (26) aufweist, der mittels einer Dichtung (28) zwischen einer Deckeldichtfläche (30) und dem Domflansch (26) über das im Wesentlichen in Richtung Domflansch (26) Kräfte übertragende Hebelelement (110) abdichtbar ist.

3. Deckelvorrichtung nach einem der vorhergehenden Ansprüche, **dadurch gekennzeichnet, dass** das Hebelelement (110) aus dem Hebel (14) und einem an dem Hebel (14) über eine Führungshülse (34) wirkverbindbaren Gewindebolzen (38) ausgebildet ist.

4. Deckelvorrichtung nach einem der vorhergehenden Ansprüche, **dadurch gekennzeichnet, dass** der Gewindebolzen (38) eine Gewindebolzenöse (40) aufweist.

5. Deckelvorrichtung nach einem der vorhergehenden Ansprüche, **dadurch gekennzeichnet, dass** an dem Dom (24) des Behälters (22) mindestens eine Gewindebolzenhalterung (50) mit Gewindebolzenhalterungsösen (52) angeordnet ist.

6. Deckelvorrichtung nach einem der vorhergehenden Ansprüche, **dadurch gekennzeichnet, dass** der Gewindebolzen (38) mittels eines durch die Gewindebolzenöse (40) und die Gewindebolzenhalterungsösen (52) steckbaren Sicherungsbolzens (42) über eine horizontale Gewindebolzenschwenkachse (48) drehbar lagerbar ist.

7. Deckelvorrichtung nach einem der vorhergehenden Ansprüche, **dadurch gekennzeichnet, dass** der Hebel (14) aus einem Hebelarm (18) und dem Hebelanschlag (16) gebildet ist, wobei der Hebelanschlag (16) durch eine beinartige Ausbildung eine Öffnung (64) aufweist.

8. Deckelvorrichtung nach einem der vorhergehenden Ansprüche, **dadurch gekennzeichnet, dass** der Hebelanschlag (16) gemeinsam mit der Führungshülse (34) in der mit der Deckeloberseite (12) einen Anschlag bildenden Position eine achtförmige Kontur aufweist.

9. Deckelvorrichtung nach einem der vorhergehenden Ansprüche 1 bis 7, **dadurch gekennzeichnet, dass** der Hebelanschlag (16) gemeinsam mit der Führungshülse (34) in der mit der Deckeloberseite (12) einen Anschlag bildenden Position eine rechteckige Kontur aufweist.

10. Deckelvorrichtung nach einem der vorhergehenden Ansprüche, **dadurch gekennzeichnet, dass** die Führungshülse (34) drehbewegliche Führungshülsenstifte (36) aufweist, die im Hebelanschlag (16) exzentrisch befestigt sind.

11. Deckelvorrichtung nach einem der vorhergehenden Ansprüche, **dadurch gekennzeichnet, dass** die Ausnehmung (46) eine mittels einer Schraubenverbindung (60) befestigbare Übergreiflasche (44) aufweist.

12. Deckelvorrichtung nach einem der vorhergehenden Ansprüche, **dadurch gekennzeichnet, dass** die Ausnehmung (46) oder die Übergreiflasche (44) durch Einkragungen (58) eine achtförmige Kontur aufweist.

13. Deckelvorrichtung nach einem der vorhergehenden Ansprüche 1 bis 11, **dadurch gekennzeichnet, dass** die Ausnehmung (46) oder die Übergreiflasche (44) durch Einkragungen (58) eine rechteckige Kontur aufweist.

14. Deckelvorrichtung nach einem der vorhergehenden Ansprüche 1 bis 9 oder 11, **dadurch gekennzeichnet, dass** die Führungshülse (34) drehbewegliche Führungshülsenstifte (36) aufweist, die im Hebelanschlag (16) konzentrisch befestigt sind.

15. Deckelvorrichtung nach einem der vorhergehenden Ansprüche 1 bis 9, **dadurch gekennzeichnet, dass** die Führungshülsenstifte (36) in der Führungshülse (34) befestigt sind, die exzentrisch drehbeweglich im Hebelanschlag (16) geführt sind.

16. Deckelvorrichtung nach einem der vorhergehenden Ansprüche 1 bis 9, **dadurch gekennzeichnet, dass** die Führungshülsenstifte (36) in der Führungshülse (34) befestigt sind, die konzentrisch drehbeweglich im Hebelanschlag (16) geführt sind.

17. Deckelvorrichtung nach einem der vorhergehenden Ansprüche, **dadurch gekennzeichnet, dass** der Hebel (14) exzentrisch um eine Hebelschwenkachse (20) schwenkbar ist.

18. Deckeivorrichtung nach einem der vorhergehenden Ansprüche 1 bis 16, **dadurch gekennzeichnet, dass** der Hebel (14) konzentrisch um eine Hebelschwenkachse (20) schwenkbar ist.

19. Deckelvorrichtung nach einem der vorhergehenden Ansprüche, **dadurch gekennzeichnet, dass** der Hebelanschlag (16) im in die Ausnehmung (46) oder in die mit einer Übergreiflasche (44) versehene Ausnehmung (46) eingeführten Zustand bei im Wesentlichen nicht rechtwinkliger Stellung der horizontalen Hebelschwenkachse (20) zu der horizontalen Gewindebolzenschwenkachse (48) mittels der Führungshülse (34) einen Anschlag bildet und somit eine formschlüssige Wirkverbindung zwischen Deckel (10) und Domflansch (26) bildet.

20. Deckelvorrichtung nach einem der vorhergehenden Ansprüche, **dadurch gekennzeichnet, dass** der Hebelanschlag (16) bei im Wesentlichen rechtwinkliger Stellung der Hebelschwenkachse (20) zu der Gewindebolzenschwenkachse (48) keinen Anschlag mit der Ausnehmung (46) oder in die mit der Übergreiflasche (44) versehene Ausnehmung (46) der Deckeloberseite (12) ausbildet.

21. Deckelvorrichtung nach Anspruch 16, **dadurch gekennzeichnet, dass** beim Verschließen des Behälters (22) und Betätigung des Hebels (14) auf der konzentrischen Hebelschwenkachse (20) zwischen Deckel (10) und Domflansch (26) durch das Hebelelement (110) durch Anziehen der Mutter (54) ein Kraftschluss bewirkbar ist.

## Claims

1. Cover device (100) for a tank opening (62) of a tank (22), in particular of a pressure tank, with at least one lever element (110) which can be fixed to the tank (22), hinged on a cover upper side (12) of a cover (10), whereby the lever element (110) engages into a recess (46) of the cover (10) and the tank (22) can be closed by actuating the lever element (110) and a lever (14) connected with the lever element (110), whereby the recess (46) has a contour which corresponds, after a vertical rotation of the lever (14) on an axis of rotation (32) which is vertical to the cover (10) in at least one position, with a contour of a lever abutment (16) of the lever (14) and/or of the lever element (110) and the tank opening (62) can be opened or closed by the cover (10), **characterized in that** the lever element (110) is formed by the lever (14) and a threaded bolt (38) on the lever (14) which can be actively connected over a a guide bush (34) and the guide bush (34) is displaceable vertically on the threaded bolt (38), freely movable and rotating on the vertical axis (32) and can be locked with means of a nut (54) and a counternut (56).

2. Cover device according to claim 1, **characterized in that** a dome (24) of the tank (22) has a dome flange (26) which can be sealed by means of a seal (28) between a cover seal surface (30) and the dome flange (26) over the lever element (110) which transmits forces substantially in direction of the dome flange (26).

3. Cover device according to any of the preceding claims, **characterized in that** the lever element (110) is formed by the lever (14) and a threaded bolt (38) on the lever (14) which can be actively connected over a guide bush (34).

4. Cover device according to any of the preceding claims, **characterized in that** the threaded bolt (38) has a threaded bolt lug (40).

5. Cover device according to any of the preceding claims, **characterized in that** at least one threaded bolt support (50) with threaded bolt support lugs (52) is placed on the dome (24) of the container (22).

6. Cover device according to any of the preceding claims, **characterized in that** the threaded bolt (38) is positioned rotating by means of a locking bolt (42) which can be inserted through the threaded bolt lug (40) and the threaded bolt support lugs (52) over a horizontal threaded bolt swivelling axis (48).

7. Cover device according to any of the preceding claims, **characterized in that** the lever (14) is formed by a lever arm (18) and the lever abutment (16), whereby the lever abutment (16) has an opening (64) due to a leg-type configuration.

8. Cover device according to any of the preceding claims, **characterized in that** the lever abutment (16) has a figure-eight contour together with the guide bush (34) in the position forming an abutment with the cover upper side (12).

9. Cover device according to any of the preceding claims 1 to 7, **characterized in that** the lever abutment (16) has a rectangular contour together with the guide bush (34) in the position forming an abutment with the cover upper side (12).

10. Cover device according to any of the preceding claims, **characterized in that** the guide bush (34) has guide bush pins (36) movable by rotation which are fixed eccentrically in the lever abutment (16).

11. Cover device according to any of the preceding claims, **characterized in that** the recess (46) has a lap-over shackle (44) which can be fixed by means of a screwed connection (60).

12. Cover device according to any of the preceding claims, **characterized in that** the recess (46) or the lap-over shackle (44) has a figure-eight contour due to notches (58).

13. Cover device according to any of the preceding claims 1 to 11, **characterized in that** the recess (46) or the lap-over shackle (44) has a rectangular contour due to notches (58).

14. Cover device according to any of the preceding claims 1 to 9 or 11, **characterized in that** the guide bush (34) has guide bush pins (36) movable by rotation which are fixed concentrically in the lever abutment (16).

15. Cover device according to any of the preceding claims 1 to 9, **characterized in that** the guide bush pins (36) are fixed in the guide bush (34) which are guided eccentrically movable by rotation in the lever abutment (16).

16. Cover device according to any of the preceding claims 1 to 9, **characterized in that** the guide bush pins (36) are fixed in the guide bush (34) which are guided concentrically movable by rotation in the lever abutment (16).

17. Cover device according to any of the preceding claims, **characterized in that** the lever (14) is swivellable eccentrically about a lever swivelling axis (20).

18. Cover device according to any of the preceding claims 1 to 16, **characterized in that** the lever (14) is swivellable concentrically about a lever swivelling axis (20).

19. Cover device according to any of the preceding claims, **characterized in that** the lever abutment (16) forms an abutment in the state introduced into the recess (46) or into the recess (46) provided with a lap-over shackle (44) for a position of the horizontal lever swivelling axis (20) which is substantially not right-angled to the horizontal threaded bolt swivelling axis (48) by means of the guide bush (34) and thus forms a positive-locking active connection between the cover (10) and the dome flange (26).

20. Cover device according to any of the preceding claims, **characterized in that** the lever abutment (16) does not form an abutment with the recess (46) or into the recess (46) provided with the lap-over shackle (44) of the cover upper side (12) for a position of the lever swivelling axis (20) which is substantially right-angled to the threaded bolt swivewelling axis (48).

21. Cover device according to claim 16, **characterized in that** a nonpositive connection can be caused by closing the tank (22) and actuating the lever (14) on the concentrical lever swivelling axis (20) between the cover (10) and the dome flange (26) by the lever element (110) by tightening the nut (54).

## Revendications

1. Dispositif de couvercle (100) pour une ouverture de réservoir (62) d'un réservoir (22), en particulier d'un réservoir sous pression, avec au moins un élément à levier (110) pouvant être fixé sur le réservoir (22), pouvant être rabattu sur un côté supérieur de couvercle (12) d'un couvercle (10), l'élément à levier (110) s'engrenant dans un évidement (46) du couvercle (10) et le réservoir (22) pouvant être fermé en actionnant l'élément à levier (110) et un levier (14) relié à l'élément à levier (110), l'évidement (46) présentant des contours qui correspondent, après une rotation verticale du levier (14) sur un axe de rotation (32) vertical par rapport au couvercle (10) dans au moins une position, à des contours d'une butée de levier (16) du levier (14) et/ou de l'élément à levier (110) et l'ouverture du réservoir (62) pouvant être ouverte ou pouvant être fermée par le couvercle (10), **caractérisé en ce que** l'élément à levier (110) est configuré par le levier (14) et un boulon fileté (38) qui peut être relié activement sur le levier (14) par une douille de guidage (34) et que la douille de guidage (34) peut être déplacée verticalement sur le boulon fileté (38), est mobile librement et est rotative sur l'axe vertical (32) et peut être bloquée au moyen d'un écrou (54) et d'un contre-écrou (56).

2. Dispositif de couvercle selon la revendication 1, **caractérisé en ce qu'**un dôme (24) du réservoir (22) présente une bride à dôme (26) qui peut être étanchée au moyen d'une étanchéité (28) entre une surface d'étanchéité de couvercle (30) et la bride à dôme (26) par l'élément à levier (110) qui transmet des forces substantiellement en direction de la bride à dôme (26).

3. Dispositif de couvercle selon l'une des revendications précédentes, **caractérisé en ce que** l'élément à levier (110) est configuré par le levier (14) et un boulon fileté (38) qui peut être relié activement sur le levier (14) par une douille de guidage (34).

4. Dispositif de couvercle selon l'une des revendications précédentes, **caractérisé en ce que** le boulon fileté (38) présente un oeillet de boulon fileté (40).

5. Dispositif de couvercle selon l'une des revendications précédentes, **caractérisé en ce qu'**au moins un support de boulon fileté (50) avec des oeillets de support de boulon fileté (52) est placé sur le dôme (24) du réservoir (22).

6. Dispositif de couvercle selon l'une des revendications précédentes, **caractérisé en ce que** le boulon fileté (38) peut être positionné rotatif au moyen d'un boulon de blocage (42) qui peut être enfoncé à travers l'oeillet de boulon fileté (40) et les oeillets de support de boulon fileté (52) par l'intermédiaire d'un axe horizontal de pivotement de boulon fileté (48).

7. Dispositif de couvercle selon l'une des revendications précédentes, **caractérisé en ce que** le levier (14) est formé par un bras de levier (18) et la butée de levier (16), la butée de levier (16) présentant une ouverture (64) par une configuration du type montant.

8. Dispositif de couvercle selon l'une des revendications précédentes, **caractérisé en ce que** la butée de levier (16) présente, ensemble avec la douille de guidage (34) dans la position qui forme une butée avec le côté supérieur du couvercle (12), des contours en forme de huit.

9. Dispositif de couvercle selon l'une des revendications précédentes 1 à 7, **caractérisé en ce que** la butée de levier (16) présente, ensemble avec la douille de guidage (34) dans la position qui forme une butée avec le côté supérieur du couvercle (12), des contours rectangulaires.

10. Dispositif de couvercle selon l'une des revendications précédentes, **caractérisé en ce que** la douille de guidage (34) présente des chevilles de douilles de guidage (36) mobiles par rotation qui sont fixées de manière excentrée dans la butée de levier (16).

11. Dispositif de couvercle selon l'une des revendications précédentes, **caractérisé en ce que** l'évidement (46) présente une languette de recouvrement (44) pouvant être fixée au moyen d'un raccord à vis (60).

12. Dispositif de couvercle selon l'une des revendications précédentes, **caractérisé en ce que** l'évidement (46) ou la languette de recouvrement (44) présente des contours en forme de huit par des encoches (58).

13. Dispositif de couvercle selon l'une des revendications précédentes 1 à 11, **caractérisé en ce que** l'évidement (46) ou la languette de recouvrement (44) présente des contours de forme rectangulaire par des encoches (58).

14. Dispositif de couvercle selon l'une des revendications précédentes 1 à 11, **caractérisé en ce que** la douille de guidage (34) présente des chevilles de douille de guidage (36) mobiles par rotation qui sont fixées de manière concentrique dans la butée du levier (16).

15. Dispositif de couvercle selon l'une des revendications précédentes 1 à 9, **caractérisé en ce que** les chevilles de douille de guidage (36) sont fixées dans la douille de guidage (34) qui sont guidées de manière excentrique mobiles en rotation dans la butée de levier (16).

16. Dispositif de couvercle selon l'une des revendications précédentes 1 à 9, **caractérisé en ce que** les chevilles de douille de guidage (36) sont fixées dans la douille de guidage (34) qui sont guidées de manière concentrique mobiles en rotation dans la butée de levier (16).

17. Dispositif de couvercle selon l'une des revendications précédentes, **caractérisé en ce que** le levier (14) est pivotant de manière excentrique autour d'un axe de pivotement du levier (20).

18. Dispositif de couvercle selon l'une des revendications précédentes 1 à 16, **caractérisé en ce que** le levier (14) est pivotant de manière concentrique autour d'un axe de pivotement du levier (20).

19. Dispositif selon l'une des revendications précédentes, **caractérisé en ce que** la butée de levier (16) forme une butée à l'état introduit dans l'évidement (46) ou dans l'évidement (46) pourvu d'une languette de recouvrement (44), pour une position de l'axe horizontal de pivotement du levier (20) substantiellement pas à angle droit par rapport à l'axe horizontal de pivotement du boulon fileté (48), au moyen de la douille de guidage (34) et forme donc une connection active positive entre le couvercle (10) et la bride à dôme (26).

20. Dispositif de couvercle selon l'une des revendications précédentes, **caractérisé en ce que** la butée de levier (16), pour une position de l'axe de pivotement du levier (20) qui est substantiellement à angle droit par rapport à l'axe de pivotement du boulon fileté (48), ne configure pas de butée avec l'évidement (46) ou dans l'évidement (46) du côté supérieur du couvercle (12) qui est pourvu de la languette de recouvrement (44).

21. Dispositif de couvercle selon la revendication 16, **caractérisé en ce qu'**une fermeture par force peut être causée, lors de la fermeture du réservoir (22) et de l'actionnement du levier (14) sur l'axe de pivotement concentrique du levier (20), entre le couvercle (10) et la bride à dôme (26) par l'élément à levier (110) en serrant l'écrou (54).
